# EUROPÄISCHE PATENTSCHRIFT

(11) **EP 0 676 574 B1**
(45) Veröffentlichungstag und Bekanntmachung des Hinweises auf die Patenterteilung: **02.09.1998**
(21) Anmeldenummer: 95104577.2
(22) Anmeldetag: 28.03.1995
(51) Int. Cl.: F16L 3/13, F16L 3/237

(54) **Halteelement**
Support device
Dispositif de fixation

(30) Priorität: 07.04.1994 DE 4412011
(43) Veröffentlichungstag der Anmeldung: 11.10.1995
(73) Patentinhaber: TRW United-Carr GmbH & Co. KG, 67677 Enkenbach-Alsenborn (DE)
(72) Erfinder: Kraus, Willibald, D-67269 Grünstadt (DE)
(74) Vertreter: Schieschke, Klaus, Dipl.-Ing.

(56) Entgegenhaltungen:
- DE-A- 3 002 031
- FR-A- 2 253 935
- FR-A- 2 623 857
- US-A- 4 591 119

## Beschreibung

Die Erfindung betrifft ein Halteelement für mindestens eine Rohrleitung, insbesondere Bremsleitung bei einem Kraftfahrzeug, mit den Merkmalen des Oberbegriffs des Patentanspruchs 1.

Als Stand der Technik ist bereits ein derartiges Halteelement bekannt, welches so ausgebildet ist, daß der schalenförmige Haltebereich von einer zusätzlichen Schale in Form eines U-förmigen Blechmantels umgeben ist, welcher mit dem Halteelement verklammert wird (GB-PS 14 03 714). Nachteilig bei diesem bekannten Halteelement ist einerseits die umständliche Montage der Rohrleitung, da zunächst die Rohrleitung in den schalenförmigen Haltebereich eingesetzt werden muß und anschließend die zusätzliche Blechschale zu montieren ist. Andererseits ist auch die Halterung der im Halteelement geführten Rohrleitung relativ unsicher, da keinerlei zusätzliche Arretiervorrichtungen vorgesehen sind. Es besteht daher die Gefahr, daß, beispielsweise bei starken Erschütterungen, die Rohrleitung aus der Halterung herausgleitet und gegen die Blechschale schlägt. Obwohl die am Innenumfang des schalenförmigen Haltebereichs angeordnete Nase dazu dient, auch Rohrleitungen kleineren Durchmessers im Halte- dazu dient, auch Rohrleitungen kleineren Durchmessers im Haltebereich zu haltern, ist trotzdem bei dieser bekannten Konstruktion nachteiligerweise nicht die Möglichkeit gegeben, funktionssicher auch Rohre eines größeren Toleranzbereiches zu haltern.

Zum Stand der Technik zählt weiterhin eine Verankerungsvorrichtung, welche so ausgebildet ist, daß an einem Kopf eine Befestigungseinrichtung angeformt ist (DE-OS 28 16 181). Hierbei sind zwei C-förmige Profile vorgesehen, wobei die Konkavform des ersten Abschnittes dem anderen, gegenüberliegenden Abschnitt, zugewendet ist. Zwischen diesen beiden Abschnitten kann sich ein Rohr einlagern. Auch diese bekannte Konstruktion weist jedoch gravierende Nachteile auf: Wird ein größeres Rohr gehaltert, so liegt ein bestimmter Bereich des Rohrumfanges ungeschützt, so daß sich Steinschlag nachteilig auswirken kann. Darüber hinaus ist die Demontage nahezu unmöglich, da hierbei der erste Abschnitt vollkommen hochgebogen werden müßte.

Zur Beseitigung der vorgenannten Nachteile bekannter Konstruktionen wird in der DE 30 02 031 C2 ein Halteelement vorgeschlagen, welches einen Lagerbereich und mindestens einen schalenförmigen, eine Nase aufweisenden Haltebereich zum teilweisen Umfassen des Rohrleitungsumfanges mit einem Spalt zum Eindrücken der Rohrleitung sowie eine zusätzlichen Schale aufweist, wobei jeweils der Haltebereich aus zwei schalenförmigen Halterungen in Form einer, den Rohrleitungsumfang teilweise umfassenden Innenschale und einer die Innenschale mit Abstand umgebenden Außenschale besteht. Dabei weisen beide Schalen einen gemeinsamen Eindrückbereich für die zu montierende Rohrleitung auf, der so gestaltet ist, daß bei dem Haltebereich eine die Innenschale überdeckende Lippe der Außenschale und eine Außenfläche des Lagerbereichs einen Eindrückbereich zum Einsetzen der Rohrleitung in die Innenschale bilden, wobei die Lippe der Außenschale und die Außenfläche des Lagerbereichs einen zur Innenschale führenden, konischen Spalt bilden und die Innenschale im Eindrückbereich die gegen den Innenumfang der Außenschale gerichtete Nase aufweist.

Diese Konstruktion bietet bereits den Vorteil, daß ein guter Schutz gegen Steinschlag sowie geringe Montagekräfte und höhere Demontagekräfte erreichbar sind und die Rohrleitung auch bei größeren Erschütterungen sicher in ihrer Befestigung gehalten wird: Werden Rohrleitungen, beispielsweise Benzinleitungen, in die Innenschale des Haltebereichs eingedrückt, so gewährleistet die Innenschale einen größeren Toleranzausgleich als bei dem bekannten Stand der Technik, wobei außerdem die beiden schalenförmigen Halterungen einen doppelten Schutz der zu befestigenden Rohrleitung bewirken. Die Rohrleitungen werden jeweils über den Eindrückbereich in die Innenschale eingesetzt und sind damit weitestgehend gegen unerwünschten Steinschlag geschützt. Infolge des axialen Abstandes der Innenschale von der Außenschale kann die Innenschale verschiedenartige Rohrleitungsdurchmesser aufnehmen, wobei andererseits bei leichter Montage der Rohrleitungen es nur sehr schwer möglich ist, im unerwünschten Sinne eine Demontage durchzuführen. Die Rohrleitungen sind damit auch bei größeren Erschütterungen einwandfrei in dem Halteelement gehaltert.

Als nachteilig hat sich jedoch herausgestellt, daß für bestimmte Anforderungen die Abzugskräfte für die Demontage einer Rohrleitung zu gering sind bzw. nicht über längere Zeit, insbesondere bei längerer Einwirkung höherer Temperaturen, in der erforderlichen Höhe aufrechterhalten werden können.

Der Erfindung liegt daher die Aufgabe zugrunde, das letztgenannte Halteelement unter Beibehalten dessen Vorzüge so weiterzubilden, daß eine ausreichend hohe Abzugskraft für die Demontage einer Rohrleitung auch über längere Zeit und unter einer höheren Temperatur gewährleistet ist.

Die Erfindung löst diese Aufgabe mit den Merkmalen des Patentanspruchs 1.

Durch die Verrastung der Innenschale und der Außenschale nach dem Einsetzen einer Rohrleitung in den betreffenden Haltebereich ergibt sich der Vorteil, daß durch die formschlüssige Verbindung der beiden Teile die Steifigkeit des Gesamtsystems und damit die Abzugskraft gegenüber einer Halterung der Rohrleitung allein durch die Innenschale deutlich erhöht wird. Des weiteren kann die Abzugskraft auf diese Weise auf einen relativ genau definierbaren Wert eingestellt werden, indem das Material und die Geometrie der Anordnung in geeigneter Weise gewählt wird.

Anders als bei dem bekannten, weiterzubildenden Halteelement, bei dem die Abzugskräfte im Anfangsstadium der Demontage solange reduziert sind, bis die Nase der Innenschale an der Innenwandung der Außenschale anliegt, wird bei dem erfindungsgemäßen Halteelement von Beginn an eine hohe Abzugskraft gewährleistet.

Durch die Verrastung von Innen- und Außenschale wird zudem sichergestellt, daß Toleranzen bei der Fertigung des Halteelements, insbesondere in den Endbereichen der Innen- und Außenschalen, keinen wesentlichen Einfluß auf die Halte- bzw. Abzugskräfte nehmen. So wird die Problematik des Materialschwundes oder der Verformung, insbesondere der Endbereiche der Innen- bzw. Außenschale durch Temperatureinwirkung wirksam gelöst.

In einer bevorzugten Ausführungsform der Erfindung ist jeweils im Endbereich der Außenschale eine Rast vorgesehen, die den als Rastnase wirkenden Endbereich der Innenschale in der Raststellung übergreift. Selbstverständlich kann jedoch auch umgekehrt der Endbereich der Innenschale als Rast ausgebildet sein, die mit einem als Rastnase ausgebildeten Endbereich der Außenschale zusammenwirkt.

Bei der bevorzugten Ausführungsform der Erfindung sind die Gestaltung und die Abmessungen, insbesondere der Endbereiche, der Innen- und Außenschalen so gewählt, daß beim Eindrücken einer Rohrleitung in einen Haltebereich die Innenschale bzw. die Innen- und Außenschale so aufgespreizt werden, daß selbsttätig die zusammenwirkenden Rasten bzw. Rastnasen in Eingriff gelangen. Hierdurch wird der Montageaufwand gegenüber einem nachträglichen Verrasten der Innen- und Außenschalen reduziert.

Der Endbereich der Innenschale ist vorzugsweise so ausgebildet, daß deren Innenwandung zusammen mit einer Fläche einen keilförmigen Eindrückbereich für die Rohrleitung bilden. Hierdurch wird die Montage der Rohrleitung weiter erleichtert.

Weitere Ausführungsformen der Erfindung ergeben sich aus den Unteransprüchen.

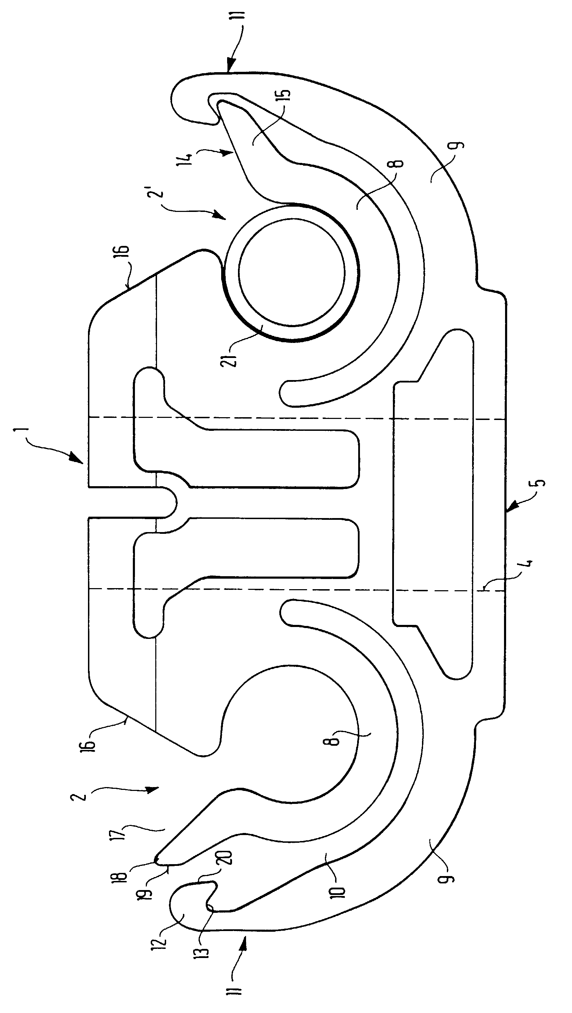

Die Erfindung wird nachfolgend anhand eines in der Zeichnung dargestellten Ausführungsbeispieles näher beschrieben.

Die einzige Figur zeigt eine Vorderansicht eines erfindungsgemäßen Halteelements für zwei Rohrleitungen, welches einen Lagerbereich 1 und zwei Haltebereiche 2 und 2' aufweist, die beidseitig des Lagerbereichs 1 angeordnet sind. Der Lagerbereich 1 besteht aus einer durchgehenden Öffnung 4, welche über ein Einschubende 5 auf einem nicht näher dargestellten, beispielsweise an einem Kraftfahrzeug vorgesehenen Zapfen befestigt wird.

Jeder Haltebereich 2 bzw. 2' besteht aus einer Innenschale 8 und einer im Abstand davon angeordneten Außenschale 9. Zwischen der Innenschale 8 und der Außenschale 9 ergibt sich ein Spalt 10. Der Innendurchmesser der Innenschale 8 dient zur Aufnahme einer zu befestigenden Rohrleitung. Die Außenschale 9 weist in ihrem Endbereich 11 eine lippenförmige Rast 12 mit einer Rastnut 13 auf. Die Innenschale 8 ist in ihrem Endbereich 14 als Lippe 15 ausgebildet, welche mit einer schrägen Außenfläche 16 des Lagerbereichs 1 zusammenwirkt. Hierdurch ergibt sich ein Eindrückbereich 17, so daß eine zu befestigende Rohrleitung über diesen Eindrückbereich in den Innenumfang der Innenschale 8 eingeschoben werden kann. Die Lippe 15 der Innenschale 8 ist an ihrem Ende als Rastnase 18 ausgebildet, die mit der Rastnut 13 in Eingriff gebracht werden kann.

Dabei sind das Material und die Abmessungen der Innen- bzw. Außenschale 8, 9, insbesondere in den Endbereichen 14, 11, vorzugsweise so gewählt, daß das Ineingriffbringen der Rastnase 18 der Innenschale 8 mit den Rastnuten 13 der Außenschale 9 selbsttätig, d.h. ohne einen weiteren Montageschritt erfolgt.

Wird eine Rohrleitung 21 über den Eindrückbereich 17 in die Innenschale 8 gedrückt, so legt sich die Lippe 15 der Innenschale 8 mit ihrer Außenseite zunächst an die Wandung 20 der Rast 12 der Außenschale 9 an. Durch das weitere Eindrücken der Rohrleitung 21 werden die Endbereiche 11, 14 der Außen- bzw. Innenschale so elastisch verformt, daß die Rastnase 18 an der Lippe 15 der Innenschale 8 in die Rastnut 13 der an der Außenschale 9 vorgesehenen Rast 12 einrastet.

Dieser Endzustand nach Beendigung der Montage ist in der rechten Hälfte der Figur dargestellt.

Bei der Demontage der Rohrleitung 21 verbleibt die Rastnase 18 stets mit der Rast 12 in Eingriff, so daß während der gesamten Abzugsbewegung der Rohrleitung 21 die von dem durch die Innen- und Außenschale gebildeten Gesamtsystem erzeugten elastischen Haltekräfte überwunden werden müssen. Es ergibt sich damit eine sehr gute Halterung der Rohrleitung in der Innenschale 8, die ein unbeabsichtigtes Lösen der Rohrleitung sicher vermeidet. Die Rohrleitung ist infolge der Innenschale und der Außenschale einwandfrei gegen Steinschlag und unerwünschte, äußere Einwirkungen geschützt.

Der Eindrückbereich 17 der Haltebereich 2 bzw. 2' ist bei dieser Ausführungsform durch die Außenfläche 16 des Lagerbereichs 1 und die Lippe 15 keilförmig ausgebildet. Diese Keilform gewährleistet eine gute und sichere Montage, da die Rohrleitung 21 solange aus der Keilform zurückspringt, wie sie nicht einwandfrei in der Innenschale 8 angeordnet ist. Damit wird eine sichere Montage gewährleistet, wobei sofort ersichtlich ist, ob die Rohrleitung einwandfrei in der Innenschale 8 lagert.

In weiterer, nicht näher dargestellter Ausführungsform der Erfindung ist es auch möglich, mehrere Haltebereiche 2 bzw. 2' um einen Lagerbereich 1 anzuordnen. Damit lassen sich eine beliebig große Anzahl von Rohrleitungen an dem Halteelement befestigen.

## Patentansprüche

1. Halteelement für mindestens eine Rohrleitung, insbesondere Bremsleitung eines Kraftfahrzeugs,
a) mit einem Lagerbereich (1) und
b) mit zumindest einem Haltebereich (2, 2') aus zwei schalenförmigen Halterungen in Form einer, den Rohrleitungsumfang teilweise umfassenden Innenschale (8) und einer die Innenschale (8) mit Abstand umgebenden Außenschale (9),
c) wobei beide Schalen (8, 9) einen gemeinsamen Eindrückbereich (17) für die zu montierende Rohrleitung (21) aufweisen,
**dadurch gekennzeichnet,**
d) daß die Innenschale (8) und die Außenschale (9) des zumindest einen Haltebereichs (2, 2') an ihren Endbereichen (14, 11) verrastbar ausgebildet sind.

2. Halteelement nach Anspruch 1, **dadurch gekennzeichnet,** daß im Endbereich (11) der Außenschale (9) eine Rast (12) vorgesehen ist, die mit einer am Endbereich (14) der Innenschale (8) vorgesehenen Rastnase (18) in Eingriff bringbar ist.

3. Halteelement nach einem der vorhergehenden Ansprüche, **dadurch gekennzeichnet,** daß der Endbereich (14) der Innenschale (8) als Lippe (15) ausgebildet ist, die mit einer Außenfläche (16) des Lagerbereichs (1) einen keilförmigen Eindrückbereich (17) bildet.

4. Halteelement nach Anspruch 1, **dadurch gekennzeichnet**, daß das Material und die Abmessungen der Innen- und Außenschale (8, 9) und deren Endbereiche (14, 11) so bestimmt sind, daß die Innen- und Außenschale (8, 9) durch das Eindrücken einer Rohrleitung (21) selbsttätig verrasten.

## Claims

1. Holding element for at least one pipe, in particular the brake line of a motor vehicle,
a) having a bearing region (1) and
b) having at least one holding region (2, 2') made up of two shell-shaped holders in the form of an inner shell (8), which partially encompasses the circumference of the pipe, and an outer shell (9) which surrounds the inner shell (8) with spacing,
c) the two shells (8, 9) having a common pressing-in region (17) for the pipe (21) to be mounted,
characterized in that
d) the inner shell (8) and the outer shell (9) of the at least one holding region (2, 2') are configured so that they can be engaged at their end regions (14, 11).

2. Holding element according to Claim 1, characterized in that a latch (12) is provided in the end region (11) of the outer shell (9), which latch can be brought into engagement with a latching lug (18) provided at the end region (14) of the inner shell (8).

3. Holding element according to one of the preceding claims, characterized in that the end region (14) of the inner shell (8) is configured as a lip (15) which forms a wedge-shaped pressing-in region (17) with an outer surface (16) of the bearing region (1).

4. Holding element according to Claim 1, characterized in that the material and the dimensions of the inner and outer shells (8, 9) and their end regions (14, 11) are determined such that the inner and outer shells (8, 9) engage automatically when a pipe (21) is pressed in.

## Revendications

1. Dispositif de fixation pour au moins une conduite tubulaire, en particulier une conduite de frein d'un véhicule automobile,
a) avec une zone de support (1) et
b) avec au moins une zone de fixation (2, 2') constituée par deux supports en forme de coquille, notamment d'une coquille interne (8) enserrant partiellement la périphérie de la conduite tubulaire et une coquille externe (9) entourant avec une certaine distance la coquille interne (8),
c) les deux coquilles (8, 9) présentant une zone d'impression commune (17) pour la conduite tubulaire à monter (21),
caractérisé en ce que
d) la coquille interne (8) et la coquille externe (9) d'au moins une zone de fixation (2, 2') sont conçues de façon à pouvoir s'encliqueter sur leur zone d'extrémité (14, 11).

2. Dispositif de fixation selon la revendication 1, caractérisé en ce que dans la zone d'extrémité (11) de la coquille externe (9), est prévue une butée (12) pouvant s'engager dans un talon de butée (18) prévu dans la zone d'extrémité (14) de la coquille interne (8).

3. Dispositif de fixation selon l'une des revendications précédentes, caractérisé en ce que la zone d'extrémité (14) de la coquille interne (8) est conçue sous forme de lèvre (15) qui forme avec une face externe (16) de la zone de support (1) une zone d'impression en forme de coin (17).

4. Dispositif de fixation selon la revendication 1, caractérisé en ce que le matériau et les dimensions de la coquille interne et de la coquille externe (8, 9) et leurs zones d'extrémité (14, 11) sont déterminés de telle sorte que la coquille interne et la coquille externe (8, 9) peuvent s'encliqueter automatiquement par la compression d'une conduite tubulaire (21).
